(19) Europäisches Patentamt European Patent Office Office européen des brevets

(11) **EP 3 782 938 B1**

(12) **EUROPEAN PATENT SPECIFICATION**

(45) Date of publication and mention
of the grant of the patent:
**09.11.2022 Bulletin 2022/45**

(21) Application number: **19788814.2**

(22) Date of filing: **29.03.2019**

(51) International Patent Classification (IPC):
**B65G 15/60** *(2006.01)*     **B65G 15/08** *(2006.01)*

(52) Cooperative Patent Classification (CPC):
**B65G 15/08; B65G 15/60;** B65G 2201/04;
B65G 2207/32

(86) International application number:
**PCT/JP2019/014201**

(87) International publication number:
**WO 2019/202956 (24.10.2019 Gazette 2019/43)**

(54) **BELT CONVEYOR AND METHOD FOR SUPPRESSING VIBRATION OF BELT CONVEYOR**

BANDFÖRDERER UND VERFAHREN ZUR SCHWINGUNGSUNTERDRÜCKUNG DES
BANDFÖRDERERS

TRANSPORTEUR À BANDE ET PROCÉDÉ DE SUPPRESSION DE VIBRATION D'UN
TRANSPORTEUR À BANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.04.2018 PCT/JP2018/015742**

(43) Date of publication of application:
**24.02.2021 Bulletin 2021/08**

(73) Proprietor: **Kawasaki Jukogyo Kabushiki Kaisha
Hyogo 650-8670 (JP)**

(72) Inventors:
• **SAKANE, Mamoru
Hyogo 650-8670 (JP)**
• **ODAGIRI, Takashi
Hyogo 650-8670 (JP)**
• **KINUGASA, Tomoyuki
Hyogo 650-8670 (JP)**

(74) Representative: **Dehns
St. Bride's House
10 Salisbury Square
London EC4Y 8JD (GB)**

(56) References cited:
CN-A- 105 151 648      JP-A- H08 268 524
JP-A- H09 175 618      JP-A- H09 175 618
JP-A- H09 194 011      JP-A- H11 263 418
JP-A- 2002 068 441      JP-A- 2002 129 982
JP-A- 2002 302 224      JP-A- 2014 114 116
JP-A- 2016 023 075      JP-U- S 592 919
US-A1- 2008 066 999

## Description

## Technical Field

The present invention relates to an air floating belt conveyor and a method of suppressing vibration of the air floating belt conveyor.

## Background Art

Known is an air floating belt conveyor configured such that a conveyor belt that conveys conveyed objects is supported by air instead of idlers (see PTL 1, for example).

JPH09 194011 A (PTL2) discloses a belt conveyor according to the preamble of claim 1 as well as methods for suppressing vibration of a belt conveyor according to the respective preamble of claims 3 and 4.

## Citation List

## Patent Literature

PTL 1: Japanese Laid-Open Patent Application Publication No. 2012-136347

PTL2: JP H09 194011 A

## Summary of Invention

## Technical Problem

The air floating belt conveyor conveys the conveyed objects, such as bulk materials, in such a manner that: an air film is formed between the conveyor belt and a trough supporting the conveyor belt; and in this state, the conveyed objects are loaded on the conveyor belt. In some cases, when conveying the conveyed objects, the entire belt conveyor vibrates depending on the amount of conveyed objects loaded. When the belt conveyor vibrates, bolts fixed to a frame and the like are loosened, and noise is generated by the vibration. Moreover, the amount of dust generated from the conveyed objects on the conveyor belt increases.

To suppress the vibration of the belt conveyor, there is a method of increasing the rigidity of the conveyor frame by, for example, increasing the weight of the conveyor frame. However, according to this method, the degree of freedom in design may deteriorate, and the manufacturing cost of the belt conveyor may increase by the increase in the weight of the conveyor frame.

The present invention was made under these circumstances, and an object of the present invention is to provide an air floating belt conveyor capable of suppressing vibration while suppressing a decrease in the degree of freedom in design and an increase in the manufacturing cost. Another object of the present invention is to provide a method of suppressing vibration of an air floating belt conveyor capable of suppressing the vibration while suppressing a decrease in the degree of freedom in design and an increase in the manufacturing cost.

## Solution to Problem

A belt conveyor according to the present invention includes: a conveyor belt configured to convey a conveyed object; a trough supporting the conveyor belt through air; an air supply line through which the air is supplied to between the conveyor belt and the trough; and a pressure variation suppressor provided at the air supply line and configured to suppress a pressure variation having a predetermined frequency in the air supply line by generating a pressure variation that interferes with the pressure variation having the predetermined frequency in the air supply line. The pressure variation suppressor includes: a main body portion having a predetermined volume; a tubular neck portion extending from the main body portion to the air supply line; and an operation frequency adjuster configured to change a sectional area of the neck portion to adjust an operation frequency of the pressure variation suppressor such that the pressure variation that interferes with the pressure variation having the predetermined frequency in the air supply line is generated from the pressure variation suppressor.

According to the above configuration, by suppressing the pressure variation having the predetermined frequency in the air supply line, the vibration of the belt conveyor corresponding to the pressure variation having the predetermined frequency can be suppressed. Moreover, according to the above configuration, the operation frequency of the pressure variation suppressor can be adjusted in accordance with the vibration characteristics of the belt conveyor. Therefore, the vibration of the belt conveyor can be effectively suppressed. Furthermore, according to the above configuration, since it is unnecessary to increase the weight of the conveyor frame, a decrease in the degree of freedom in design and an increase in the manufacturing cost can be suppressed.

In the above belt conveyor, the operation frequency adjuster may be constituted by an opening degree adjusting valve provided at the neck portion.

According to this configuration, the operation frequency adjuster can be easily formed.

A method of suppressing vibration of a belt conveyor according to the present invention is a method of suppressing vibration of a belt conveyor, the belt conveyor including: a conveyor belt configured to convey a conveyed object; a trough supporting the conveyor belt through air; an air supply line through which the air is supplied to between the conveyor belt and the trough; and a pressure variation suppressor provided at the air supply line and including a main body portion and a tubular neck portion, the main body portion having a predetermined volume, the neck portion extending from the main body portion to the air supply line. The method includes suppressing the vibration of the belt conveyor by suppressing a pressure variation having a predetermined frequency in the air supply line, the pressure variation having the predetermined frequency in the air supply line being suppressed by changing a sectional area of the neck portion to adjust an operation frequency of the pressure variation suppressor such that a pressure variation that interferes with the pressure variation having the predetermined frequency in the air supply line is generated from the pressure variation suppressor.

According to this method, the vibration of the belt conveyor can be effectively suppressed by adjusting the operation frequency of the pressure variation suppressor in accordance with the vibration characteristics of the belt conveyor. Moreover, according to this method, since it is unnecessary to increase the weight of the conveyor frame, the decrease in the degree of freedom in design and the increase in the manufacturing cost can be suppressed.

A method of suppressing vibration of a belt conveyor according to the present invention is a method of suppressing vibration of a belt conveyor, the belt conveyor including: a conveyor belt configured to convey a conveyed object; a trough supporting the conveyor belt through air; an air supply line through which the air is supplied to between the conveyor belt and the trough; and a pressure variation suppressor provided at the air supply line and including a main body portion and a tubular neck portion, the main body portion having a predetermined volume, the neck portion extending from the main body portion to the air supply line. The method includes suppressing the vibration of the belt conveyor by suppressing a pressure variation having a predetermined frequency in the air supply line, the pressure variation having the predetermined frequency in the air supply line being suppressed by changing the volume of the main body portion to adjust an operation frequency of the pressure variation suppressor such that a pressure variation that interferes with the pressure variation having the predetermined frequency in the air supply line is generated from the pressure variation suppressor.

According to this method, the vibration of the belt conveyor can be effectively suppressed by adjusting the operation frequency of the pressure variation suppressor in accordance with the vibration characteristics of the belt conveyor. Moreover, since it is unnecessary to increase the weight of the conveyor frame, the decrease in the degree of freedom in design and the increase in the manufacturing cost can be suppressed.

## Advantageous Effects of Invention

According to the above configuration, the air floating belt conveyor capable of suppressing the vibration while suppressing the decrease in the degree of freedom in design and the increase in the manufacturing cost can be provided. Moreover, the method capable of suppressing the vibration of the air floating belt conveyor while suppressing the decrease in the degree of freedom in design and the increase in the manufacturing cost can be provided.

## Brief Description of Drawings

FIG. 1 is a schematic diagram of a belt conveyor.
FIG. 2 is a sectional view taken along line II-II of FIG. 1.
FIG. 3 is a sectional view taken along line III-III of FIG. 1.

## Description of Embodiments

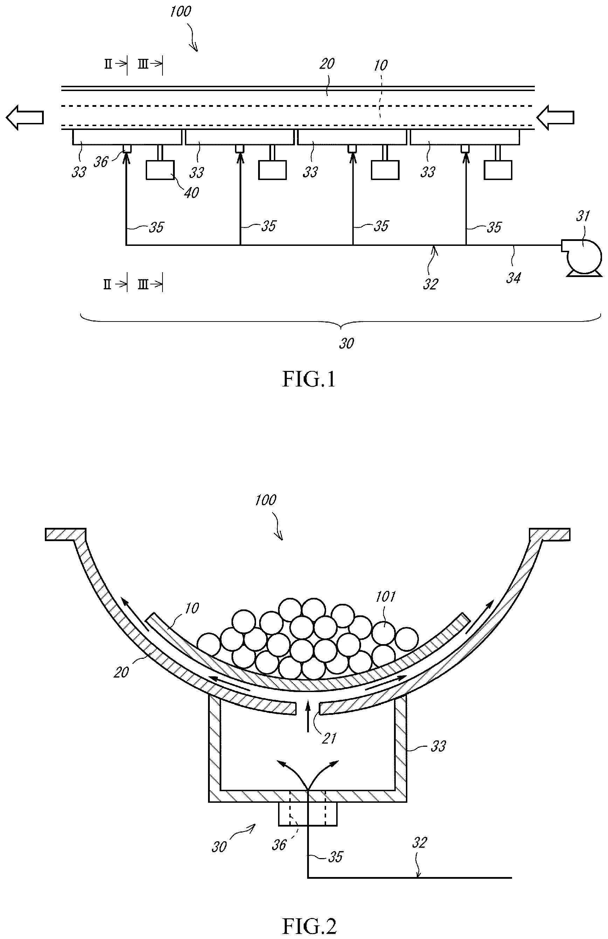

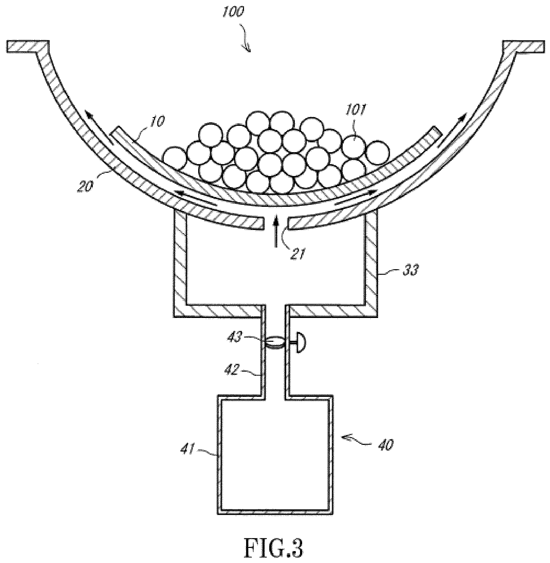

Hereinafter, a belt conveyor 100 according to an embodiment of the present invention will be described. FIG. 1 is a schematic diagram of the belt conveyor 100. FIG. 2 is a sectional view taken along line II-II of FIG. 1. FIG. 3 is a sectional view taken along line III-III of FIG. 1.

As shown in FIG. 1, the belt conveyor 100 according to the present embodiment is a so-called air floating belt conveyor and includes a conveyor belt 10, a trough 20, an air supply line 30, and pressure variation suppressors 40. Hereinafter, these components will be described in order.

## Conveyor Belt

The conveyor belt 10 conveys conveyed objects 101, such as bulk materials. The conveyor belt 10 is formed to have an endless shape. The conveyor belt 10 is wound around a drive pulley and a driven pulley (both not shown) and is driven to rotate. It should be noted that FIG. 1 shows only an outward route side (carrier side) of the conveyor belt 10. The conveyor belt 10 has flexibility and has a shape corresponding to the shape of the belowdescribed trough 20. In the present embodiment, as shown in FIG. 2, the conveyor belt 10 has a shape that is convex downward in a sectional view. The conveyed objects 101 are loaded on an upper surface of the conveyor belt 10.

## Trough

The trough 20 supports the conveyor belt 10 through air. The trough 20 has a shape that is convex downward in a sectional view. Air supply holes 21 are formed on a bottom portion of the trough 20 so as to be lined up in a longitudinal direction at regular intervals. As shown by arrows in FIG. 2, when the air is supplied from the air supply line 30 (air supply headers 33) through the air supply holes 21, the supplied air flows between the trough 20 and the conveyor belt 10 and further flows outward in a width direction of the conveyor belt 10.

As above, the conveyor belt 10 and the trough 20 do not contact each other during operation but are connected to each other through the air that is an elastic body. The conveyor belt 10 and the trough 20 vibrate due to various conditions, and the vibration of the conveyor belt 10 and the vibration of the trough 20 influence each other through the air. Especially when the amount of conveyed objects 101 conveyed (the amount of conveyed objects 101 loaded) is a predetermined amount, the entire belt conveyor 100 vibrates largely.

**Air Supply Line**

The air supply line 30 is a line through which the air is supplied to between the conveyor belt 10 and the trough 20. The air supply line 30 includes an air supply blower 31, an air supply pipe 32, and a plurality of air supply headers 33 which are arranged in this order from an upstream side.

The air supply blower 31 is a device configured to pressurize the air and supply the air. The air supply line 30 of the present embodiment includes one air supply blower 31 but may include a plurality of air supply blowers 31. For example, one air supply line 30 may be provided at each of the outward route side and a return route side (return side), or a plurality of air supply lines 30 may be provided at each of the outward route side and the return route side.

The air supply pipe 32 is a pipe through which the air supplied from the air supply blower 31 is supplied to the air supply headers 33. The air supply pipe 32 includes a common portion 34 and a plurality of branch portions 35. The common portion 34 is connected to the air supply blower 31. The branch portions 35 branch from the common portion 34 and extend toward the corresponding air supply headers 33.

The air supply headers 33 once store the air supplied from the air supply pipe 32 and then supply the air to between the conveyor belt 10 and the trough 20. As shown in FIG. 1, the air supply headers 33 are arranged on a lower surface of the trough 20 so as to be lined up in the longitudinal direction of the trough 20. As shown in FIG. 2, an air supply port 36 is formed at a lower portion of each air supply header 33, and the air is supplied from the air supply pipe 32 through the air supply port 36. Each air supply header 33 is provided so as to correspond to the plurality of air supply holes 21 and supplies the air through the plurality of air supply holes 21 to between the conveyor belt 10 and the trough 20. Since the air supply headers 33 once store the air, differences among the pressures of the air supplied to the air supply holes 21 can be suppressed.

**Pressure Variation Suppressor**

The pressure variation suppressors 40 are provided at the air supply line 30 and suppress a pressure variation having a predetermined frequency generated in the air in the air supply line 30. The pressure variation suppressors 40 of the present embodiment are so-called Helmholtz resonators. The Helmholtz resonator resonates with the pressure variation having the predetermined frequency generated in the air in the air supply line 30 to generate a pressure variation which interferes with the pressure variation having the predetermined frequency. With this, the pressure variation having the predetermined frequency generated in the air in the air supply line 30 can be suppressed. Hereinafter, the frequency of the pressure variation generated from the pressure variation suppressor 40 that resonates with the pressure variation of the air in the air supply line 30 is referred to as an "operation frequency."

As shown in FIG. 3, the pressure variation suppressor 40 of the present embodiment includes a main body portion 41 and a tubular neck portion 42. The main body portion 41 has a predetermined volume, and the neck portion 42 extends from the main body portion 41 to the air supply line 30. When V denotes the volume of the main body portion 41, S denotes a sectional area of the neck portion 42, 1 denotes a length of the neck portion 42, c denotes the speed of sound, and f denotes the operation frequency of the pressure variation suppressor 40, a relation therebetween can be represented by Formula 1 below.

**Formula 1**

$$f = \frac{c}{2\pi}\sqrt{\frac{S}{Vl}} \qquad \cdot \cdot \cdot (1)$$

The pressure variation suppressor 40 of the present embodiment further includes an operation frequency adjuster 43 configured to adjust the operation frequency. The operation frequency adjuster 43 is constituted by an opening degree adjusting valve (in the present embodiment, a butterfly valve) provided at the neck portion 42 and can change the sectional area of the neck portion 42. To be specific, the operation frequency adjuster 43 can change the sectional area S of the neck portion 42 in Formula 1 above, and with this, can adjust the operation frequency f of the pressure variation suppressor 40. It should be noted that the operation frequency adjuster 43 may be constituted by a mechanism other than the opening degree adjusting valve. For example, the neck portion 42 may be made of a flexible material, and the operation frequency adjuster 43 may be configured to change the sectional area of the neck portion 42 by sandwiching the neck portion 42 from an outside. Moreover, for example, the operation frequency adjuster 43 may be a mechanism configured to replace the neck portion 42 with another neck portion 42 having a different sectional area.

As above, the pressure variation suppressor 40 of the present embodiment includes the operation frequency adjuster 43 configured to be able to adjust the operation frequency. With this, when the vibration of the belt conveyor 100 increases, the operation frequency adjuster 43 adjusts the operation frequency such that the pressure variation of the air supply line 30 and the pressure variation generated from the pressure variation suppressor 40 interfere with each other. Thus, the vibration of the belt conveyor 100 can be effectively suppressed. It should be noted that even when the vibration characteristics of the belt conveyor 100 change, the vibration of the belt conveyor 100 can be effectively suppressed by suitably adjusting the operation frequency of the pressure variation suppressor 40.

The main body portion 41 of the present embodiment is formed in a box shape. However, the shape of the main body portion 41 is not limited to the box shape. For example, the main body portion 41 may have a tubular shape extending along the conveyor belt 10 or may have such a complex shape as not to interfere with other members. The main body portion 41 is only required to have a certain volume or more.

The main body portion 41 may be configured such that the volume thereof is changeable. For example, the volume of the main body portion 41 can be changed by: forming the main body portion 41 such that the main body portion 41 can expand or contract; forming the main body portion 41 such that a dividing plate can be inserted into the main body portion 41; or forming the main body portion 41 such that sand, water, or the like can be supplied to or discharged from an inside of the main body portion 41. In this case, the volume V of the main body portion 41 in Formula 1 above can be changed, and therefore, the operation frequency f of the pressure variation suppressor 40 can be adjusted.

Moreover, the length of the neck portion 42 of the present embodiment is constant but may be changeable. For example, when the neck portion 42 is formed in a bellows shape, the length of the neck portion 42 can be changed. In this case, the length 1 of the neck portion 42 in Formula 1 above can be changed, and therefore, a resonance frequency of the pressure variation suppressor 40 can be adjusted.

In the present embodiment, the pressure variation suppressors 40 are provided at the lower portions of the air supply headers 33. However, the pressure variation suppressors 40 may be provided at other portions of the air supply headers 33, such as side portions of the air supply headers 33. Moreover, the pressure variation suppressors 40 may be provided at the air supply pipe 32 instead of the air supply headers 33. Furthermore, the pressure variation suppressor 40 may be provided at the common portion 34 of the air supply pipe 32.

## Reference Signs List

| | |
|---|---|
| 10 | conveyor belt |
| 20 | trough |
| 30 | air supply line |
| 40 | pressure variation suppressor |
| 41 | main body portion |
| 42 | neck portion |
| 43 | operation frequency adjuster |
| 100 | belt conveyor |
| 101 | conveyed object |

## Claims

1. A belt conveyor (100) comprising:

   a conveyor belt (10) configured to convey a conveyed object (101);
   a trough (20) supporting the conveyor belt (10) through air;
   an air supply line (30) through which the air is supplied to between the conveyor belt (10) and the trough (20); **characterized in that**
   a pressure variation suppressor (40) provided at the air supply line (30) and configured to suppress a pressure variation having a predetermined frequency in the air supply line (30) by generating a pressure variation that interferes with the pressure variation having the predetermined frequency in the air supply line (30), and **in that**
   the pressure variation suppressor (40) includes a main body portion (41) having a predetermined volume,
   a tubular neck portion (42) extending from the main body portion (41) to the air supply line (30), and
   an operation frequency adjuster (43) configured to change a sectional area of the neck portion (42) to adjust an operation frequency of the pressure variation suppressor (40) such that the pressure variation that interferes with the pressure variation having the predetermined frequency in the air supply line (30) is generated from the pressure variation suppressor (40).

2. The belt conveyor (100) according to claim 1, wherein the operation frequency adjuster (43) is constituted by an opening degree adjusting valve provided at the neck portion.

3. A method of suppressing vibration of a belt conveyor (100),
   the belt conveyor (100) comprising:

a conveyor belt (10) configured to convey a conveyed object (101);
a trough (20) supporting the conveyor belt (10) through air;
an air supply line (30) through which the air is supplied to between the conveyor belt (10) and the trough (20); **characterized in that**
a pressure variation suppressor (40) provided at the air supply line (30) and including a main body portion (41) and a tubular neck portion (42), the main body portion (41) having a predetermined volume, the neck portion (42) extending from the main body portion (41) to the air supply line (30),
the method comprising
suppressing the vibration of the belt conveyor (100) by suppressing a pressure variation having a predetermined frequency in the air supply line (30), the pressure variation having the predetermined frequency in the air supply line (30) being suppressed by changing a sectional area of the neck portion (42) to adjust an operation frequency of the pressure variation suppressor (40) such that a pressure variation that interferes with the pressure variation having the predetermined frequency in the air supply line (30) is generated from the pressure variation suppressor (40).

4. A method of suppressing vibration of a belt conveyor (100),
the belt conveyor (100) comprising:

a conveyor belt (10) configured to convey a conveyed object (101);
a trough (20) supporting the conveyor belt (10) through air;
an air supply line (30) through which the air is supplied to between the conveyor belt (10) and the trough (20); **characterized in that**
a pressure variation suppressor (40) provided at the air supply line (30) and including a main body portion (41) and a tubular neck portion (42) extending from the main body portion (41) to the air supply line (30),
the method comprising
suppressing the vibration of the belt conveyor (100) by suppressing a pressure variation having a predetermined frequency in the air supply line (30), the pressure variation having the predetermined frequency in the air supply line (30) being suppressed by changing the volume of the main body portion (41) to adjust an operation frequency of the pressure variation suppressor (40) such that a pressure variation that interferes with the pressure variation having the predetermined frequency in the air supply line (30) is generated from the pressure variation suppressor (40).

sor (40).

**Patentansprüche**

1. Bandförderer (100), umfassend:

ein Förderband (10), das konfiguriert ist, ein Fördergut (101) zu fördern;
eine Wanne (20), die das Förderband (10) durch Luft trägt;
eine Luftzufuhrleitung (30), durch die die Luft zwischen dem Förderband (10) und der Wanne (20) zugeführt wird; **dadurch gekennzeichnet, dass**
ein Druckschwankungsdämpfer (40) an der Luftzufuhrleitung (30) bereitgestellt und so konfiguriert ist, dass er eine Druckschwankung mit einer vorbestimmten Frequenz in der Luftzufuhrleitung (30) dämpft, indem er eine Druckschwankung erzeugt, die mit der Druckschwankung mit der vorbestimmten Frequenz in der Luftzufuhrleitung (30) interferiert, und dadurch, dass
der Druckschwankungsdämpfer (40) Folgendes einschließt einen Hauptkörperabschnitt (41), der ein vorbestimmtes Volumen aufweist,
einen röhrenförmigen Halsabschnitt (42), der sich von dem Hauptkörperabschnitt (41) zu der Luftzufuhrleitung (30) erstreckt, und
eine Betriebsfrequenz-Einstellvorrichtung (43), die so konfiguriert ist, dass sie eine Querschnittsfläche des Halsabschnitts (42) ändert, um eine Betriebsfrequenz des Druckschwankungsdämpfers (40) so einzustellen, dass die Druckschwankung, die mit der Druckschwankung mit der vorbestimmten Frequenz in der Luftzufuhrleitung (30) interferiert, von dem Druckschwankungsdämpfer (40) erzeugt wird.

2. Bandförderer (100) nach Anspruch 1, wobei die Betriebsfrequenz-Einstellvorrichtung (43) durch ein Öffnungsgrad-Einstellventil gebildet wird, das an dem Halsabschnitt bereitgestellt ist.

3. Verfahren zur Dämpfung von Vibration eines Förderbandes (100),
wobei das Förderband (100) umfasst:

ein Förderband (10), das konfiguriert ist, ein Fördergut (101) zu fördern;
eine Wanne (20), die das Förderband (10) durch Luft trägt;
eine Luftzufuhrleitung (30), durch die die Luft zwischen dem Förderband (10) und der Wanne (20) zugeführt wird;
**dadurch gekennzeichnet, dass**
ein Druckschwankungsdämpfer (40) an der Luftzufuhrleitung (30) bereitgestellt ist und einen Hauptkörperabschnitt (41) und einen röhrenförmigen Halsabschnitt (42) einschließt, wobei der Hauptkörperabschnitt (41) ein vorbestimmtes Volumen aufweist und der Halsabschnitt (42) sich von dem Hauptkörperabschnitt (41) zu der Luftzufuhrleitung (30) hin erstreckt, wobei das Verfahren

ein Dämpfen der Vibration des Bandförderers (100) durch Dämpfen einer Druckschwankung mit einer vorbestimmten Frequenz in der Luftzufuhrleitung (30) umfasst, wobei die Druckschwankung mit der vorbestimmten Frequenz in der Luftzufuhrleitung (30) durch Ändern einer Querschnittsfläche des Halsabschnitts (42) gedämpft wird, um eine Betriebsfrequenz des Druckschwankungsdämpfers (40) so einzustellen, dass eine Druckschwankung, die mit der Druckschwankung mit der vorbestimmten Frequenz in der Luftzufuhrleitung (30) interferiert, von dem Druckschwankungsdämpfer (40) erzeugt wird.

**4.** Verfahren zur Dämpfung von Vibration eines Förderbandes (100), wobei das Förderband (100) umfasst:

ein Förderband (10), das konfiguriert ist, ein Fördergut (101) zu fördern; eine Wanne (20), die das Förderband (10) durch Luft trägt; eine Luftzufuhrleitung (30), durch die die Luft zwischen dem Förderband (10) und der Wanne (20) zugeführt wird; **dadurch gekennzeichnet, dass**

einen Druckschwankungsdämpfer (40), der an der Luftzufuhrleitung (30) bereitgestellt ist und einen Hauptkörperabschnitt (41) und einen röhrenförmigen Halsabschnitt (42) einschließt, der sich von dem Hauptkörperabschnitt (41) zu der Luftzufuhrleitung (30) hin erstreckt, wobei das Verfahren

das Dämpfen der Vibration des Bandförderers (100) durch Dämpfen einer Druckschwankung mit einer vorbestimmten Frequenz in der Luftzufuhrleitung (30) umfasst, wobei die Druckschwankung mit der vorbestimmten Frequenz in der Luftzufuhrleitung (30) durch Ändern des Volumens des Hauptkörperabschnitts (41) gedämpft wird, um eine Betriebsfrequenz des Druckschwankungsdämpfers (40) so einzustellen, dass eine Druckschwankung, die mit der Druckschwankung mit der vorbestimmten Frequenz in der Luftzufuhrleitung (30) interferiert, von dem Druckschwankungsdämpfer (40) erzeugt wird.

## Revendications

**1.** Transporteur à courroie (100) comprenant :

une courroie transporteuse (10) configurée pour transporter un objet à transporter (101) ; une auge (20) supportant la courroie transporteuse (10) avec de l'air ; une conduite d'alimentation en air (30) à travers laquelle l'air est fourni entre la courroie transporteuse (10) et l'auge (20) ; **caractérisé en ce que**

un dispositif de suppression de variation de pression (40) prévu au niveau de la conduite d'alimentation en air (30) et configuré pour supprimer une variation de pression présentant une fréquence prédéterminée dans la conduite d'alimentation en air (30) par génération d'une variation de pression qui interfère avec la variation de pression présentant la fréquence prédéterminée dans la conduite d'alimentation en air (30), et **en ce que**

le dispositif de suppression de variation de pression (40) inclut une partie corps principal (41) présentant un volume prédéterminé, une partie col tubulaire (42) s'étendant de la partie corps principal (41) à la conduite d'alimentation en air (30), et un ajusteur de fréquence d'opération (43) configuré pour changer une zone de section de la partie col (42) pour ajuster une fréquence d'opération du dispositif de suppression de variation de pression (40) de sorte que la variation de pression qui interfère avec la variation de pression présentant la fréquence prédéterminée dans la conduite d'alimentation en air (30) soit générée par le dispositif de suppression de variation de pression (40).

**2.** Transporteur à courroie (100) selon la revendication 1, dans lequel l'ajusteur de fréquence d'opération (43) est constitué par une soupape d'ajustement de degré d'ouverture prévue au niveau de la partie col.

**3.** Procédé de suppression de vibration d'un transporteur à courroie (100), le transporteur à courroie (100) comprenant :

une courroie transporteuse (10) configurée pour transporter un objet à transporter (101) ; une auge (20) supportant la courroie transporteuse (10) avec de l'air ; une conduite d'alimentation en air (30) à travers laquelle l'air est fourni entre la courroie transporteuse (10) et l'auge (20) ; **caractérisé en ce que**

un dispositif de suppression de variation de pression (40) prévu au niveau de la conduite d'alimentation en air (30) et incluant une partie corps principal (41) et une partie col tubulaire (42), la partie corps principal (41) présentant un volume prédéterminé, la partie col (42) s'étendant depuis la partie corps principal (41) à la conduite d'alimentation en air (30),

le procédé comprenant l'étape consistant à supprimer la vibration du transporteur à courroie (100) par suppression d'une variation de pression présentant une fréquence prédéterminée dans la conduite d'alimentation en air (30), la variation de pression présentant la fréquence prédéterminée dans la conduite d'alimentation en air (30) étant supprimée par changement d'une zone de section de la partie col (42) pour ajuster une fréquence d'opération du dispositif de suppression de variation de pression (40) de sorte qu'une variation de pression qui interfère avec la variation de pression présentant la fréquence prédéterminée dans la conduite d'alimentation en air (30) soit générée par le dispositif de suppression de variation de pression (40).

4. Procédé de suppression de vibration d'un transporteur à courroie (100),

le transporteur à courroie (100) comprenant :

une courroie transporteuse (10) configurée pour transporter un objet à transporter (101) ;
une auge (20) supportant la courroie transporteuse (10) avec de l'air ;
une conduite d'alimentation en air (30) à travers laquelle l'air est fourni entre la courroie transporteuse (10) et l'auge (20) ; **caractérisé en ce que**
un dispositif de suppression de variation de pression (40) prévu au niveau de la conduite d'alimentation en air (30) et incluant une partie corps principal (41) et une partie col tubulaire (42) s'étendant depuis la partie corps principal (41) à la conduite d'alimentation en air (30),

le procédé comprenant l'étape consistant à supprimer la vibration du transporteur à courroie (100) par suppression d'une variation de pression présentant une fréquence prédéterminée dans la conduite d'alimentation en air (30), la variation de pression présentant la fréquence prédéterminée dans la conduite d'alimentation en air (30) étant supprimée par changement du volume de la partie corps principal (41) pour ajuster une fréquence d'opération du dispositif de suppression de variation de pression (40) de sorte qu'une variation de pression qui interfère avec la variation de pression présentant la fréquence prédéterminée dans la conduite d'alimentation en air (30) soit générée par le dispositif de suppression de variation de pression (40).

FIG.1

FIG.2

FIG.3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09194011 A

- JP 2012136347 A